# EUROPEAN PATENT APPLICATION

(11) **EP 3 991 865 A1**
(43) Date of publication of application: **04.05.2022**
(21) Application number: 20216111.3
(22) Date of filing: 21.12.2020
(51) Int. Cl.: B09B 3/00, B09B 5/00, B29B 7/00, B29B 17/00, B29B 17/02, B29C 43/00, B30B 9/00, B30B 11/00

(54) **EQUIPMENT FOR ENVIRONMENTALLY FRIENDLY PROCESSING OF WASTE PACKAGING**

(30) Priority: 29.10.2020 CZ 202038166 U
(71) Applicant: ITB Engineering & Production s.r.o., 37001 Ceské Budejovice (CZ); Vysoká skola technická a ekonomická v Ceskych Budejovicich, 37001 Ceské Budejovice (CZ)
(72) Inventor: Marousek, Josef, 37001 Litvínovice (CZ); Stehel, Vojtech, 37004 Ceské Budejovice (CZ); Vrbka, Jaromír, 37372 Lisov (CZ); Rowland, Zuzana, 37004 Ceské Budejovice (CZ)
(74) Representative: Sedlák, Jirí

(57) **Abstract**

The equipment for the environmentally friendly processing of soft waste packaging materials, in particular packaging materials with a high content of cellulose, is comprised of the grinding equipment (1), the mixing equipment (3), and the pressing equipment (10). The grinding equipment (1), the mixing equipment (3), and the pressing equipment (10) form an integral system that is adapted for installation into a container and/or onto the carriage of a cargo means of transport. The items of equipment (1, 3, 10) are mutually connected within the framework of this integral assembly. The integral assembly is fitted with at least one drive unit (21) with a system (24) for torque distribution. The mixing equipment (3) is fitted with the dosing equipment (4) for a filling mixture and a mixing chamber (5). The pressing equipment (10) is equipped with the spiral conveyor (11) and the pressing chamber (12). The inlet diameter of the pressing chamber (12), which is connected to the spiral conveyor (11), is larger than its outlet diameter. The integral assembly also comprises the central control unit (22), to which the items of equipment (1, 3, 10) are connected.

## Description

### Field of the Invention

The invention discloses equipment for the environmentally friendly processing of waste packaging and a method of such waste disposal. In this case, in particular cardboard packaging on the basis of cellulose with addition of plastic materials and aluminium, and environmentally friendly disposal thereof are concerned.

### Background of the Invention

Annually, approximately 200 billion of Tetra Pak cardboard packages are produced where the composition of the materials is as follows: approximately 55 to 80% of cellulose-based carton, 10 to 25% of polyethylene, and 5 to 10% of aluminium foil. The production of Tetra Pak has been on the rise in the long term. In its reports, the Tetra Pak concern states that approximately 20% of such packaging materials are recycled. However, the reality is different. In fact, only a paper, cellulose-based portion of the carton package is recycled successfully. Nonetheless, the interest of the paper converting industry in recycling the cellulose recycled product is decreasing with the decreasing quality of cellulose used in the cardboard material.

Currently, there are only three approaches to the disposal of the waste packaging material of the Tetra Pak type after the paper converting industry has recycled cardboard forming the skeleton of the packaging material, i.e. after the recovery of cellulose. The least environmentally friendly solution for the disposal of such waste rests in its depositing on waste storage premises, i.e. dumping sites. This option represents expenses for the company disposing of the material in the amount of CZK 1,000 to CZK 2,000 per ton of waste deposited on a dumping site. However, the new legislation regulating waste management introduces European goals in the area of communal waste recycling and motivates municipalities to restrict this type waste disposal dramatically.

Another type of Tetra Pak packages disposal is by incineration. This method represents another financially demanding method of disposal as it requires high input investments in the necessary treatment of the exhaust gases that are generated and also requires operating costs related to the incineration process as such. During incineration, high burning temperatures up to 1,700 °C must be attained, which necessitates additional supply of oxygen to the combustion chamber, which makes the entire process even more expensive.

References mention methods for Tetra Pak disintegration by chloroform, using pyrolysis and other methods. Generally, environmentally unfriendly and economically non-viable solutions are concerned. Perhaps the worst option is the use of similar waste packages for land-filling as aluminium present in such packaging materials disrupts soil chemistry completely.

From technological practice, a method of cellulose-based packaging materials disposal by their grinding in grinding equipment is known where the resulting ground pulp is mixed in mixing equipment with resin-based binder and the resulting mixture is processed in pressing equipment into boards for construction purposes. The advantage of such boards is their environmentally friendly aspect resting in the fact that recycled material is used and in their good resistance to humidity and weather effects. On the other hand, the obtained boards have considerable disadvantages as they fail to reach in particular the strength performance parameters of similar wood-pulp boards, above all hardness. This is the reason why they are not as much sought-after material as for example OSB boards.

Recycling of Tetra Pak packaging materials has been covered by many authors, which fact can be evidenced by some of the published studies:
- Mourad, A. L., Garcia, E. E., Vilela, G. B., & von Zuben, F. (2008). Environmental effects from a recycling rate increase of cardboard of aseptic packaging system for milk using life cycle approach. The International Journal of Life Cycle Assessment, 13(2), 140*;*
- Lopes, C. M., & Felisberti, M. I. (2006). Composite of low-density polyethylene and aluminum obtained from the recycling of postconsumer aseptic packaging. Journal of Applied Polymer Science, 101(5), 3183-3191;
- Lokahita, B., Aziz, M., Yoshikawa, K., & Takahashi, F. (2017). Energy and resource recovery from Tetra Pak waste using hydrothermal treatment. Applied energy, 207, 107-113;
- Lopes, C. M. A., Gonçalves, M. D. C., & Felisberti, M. I. (2007). Blends of poly (ethylene terephthalate) and low density polyethylene containing aluminium: A material obtained from packaging recycling. Journal of Applied polymer science, 106(4), 2524-2535;
- Tallini, A., & Cedola, L. (2018). A review of the properties of recycled and waste materials for energy refurbishment of existing buildings towards the requirements of NZEB. Energy Procedia, 148, 868-875.

The purpose of the invention is to present compact and in particular mobile equipment able to process waste packaging, in particular Tetra Pak waste packages, to ground pulp, which is then directly processed into a building mixture of the aggregate type, which is then converted by pressing into a usable construction prefabricated component that can be used in the building industry.

### Summary of the Invention

The disadvantages of the currently known technical solutions are surmounted by the presented equipment for the environmentally friendly processing of soft waste packaging, in particular packages with a high content of cellulose where the cellulose portion is protected by plastic and/or metal-based coatings. The equipment for the environmentally friendly processing of soft waste packaging materials comprises three functionally different structural units. The structural units refer to grinding equipment, mixing equipment, and pressing equipment. The grinding equipment is used to process packaging by grinding to produce ground pulp from waste packaging. The mixing equipment is used for mixing ground pulp with a filling mixture to prepare a building mixture from waste packaging. The pressing equipment then serves to remix and compact the building mixture from waste packaging. These units together form one integral assembly that is adapted for installation into a container and/or onto the carriage of a cargo means of transport. The grinding equipment outlet is connected to the inlet of the mixing equipment. Then the mixing equipment outlet is connected to the inlet of the pressing equipment. The grinding equipment, the mixing equipment as well as the pressing equipment are powered either by a single drive unit fitted with torque distribution systems for individual items of equipment, or by several drive units, ideally, by three separate ones.

The mixing equipment comprises dosing equipment for a filling mixture and a mixing chamber. The pressing equipment is equipped with a spiral conveyor and a pressing chamber arranged at the outlet of the spiral conveyor. The pressing equipment carries out final mixing and compacting of the building mixture from waste packaging meaning that the inlet diameter of the pressing chamber connected to the spiral conveyor is larger than its outlet diameter. The grinding equipment, the mixing equipment as well as the pressing equipment are connected, in terms of power supply and data transmission, to the central control unit of the equipment where this control unit forms an integral part of the equipment for the environmentally friendly processing of soft waste packaging materials.

In a preferred embodiment, the pressing equipment is fitted at its outlet with a hopper forming a fastener between the inlet of the pressing equipment and the outlet of the mixing equipment. The newly created building mixture from waste packaging is supplied by the hopper from the mixing equipment to the pressing equipment.

In a different embodiment, the outlet section of the pressing chamber has the shape of a truncated cone for pressing out the obtained and compacted building mixture from waste packaging into external curing moulds.

In another preferred embodiment, the pressing equipment is fitted at its end by a through-feed shaped curing mould with square or rectangular cross-section. The shape of the curing mould corresponds to the external shape of the construction prefabricated component to be produced. The curing mould is connected to the outlet diameter of the pressing chamber and serves for complete the curing process of the semi-finished construction prefabricated component. In a preferred embodiment, the through-feed shaped curing mould is fitted with perforation to improve the contact of the compressed building mixture from waste packaging with air affecting the resulting curing rate of the compressed building mixture.

In the following preferred embodiment, the through-feed shaped curing mould is also fitted with a divider providing a gauge. The gauge detects the length of the bar-shaped cured construction prefabricated component and activates the divider that carries out cutting of the semi-finished product to the required size of the construction prefabricated component.

In yet another preferred embodiment, the equipment for the environmentally friendly processing of soft waste packaging materials also comprises dosing equipment for curing mixture. The dosing equipment is opened in at least one point to the spiral conveyor, where dosing of the curing mixture into the building mixture from waste packaging accelerates the curing process of the compacted building mixture from waste packaging.

In another preferred embodiment, the dosing equipment for curing mixture comprises at least one curing mixture container, feed pump, dosing pipe, and at least one injector. The container is connected to the feed pump and the pump is connected to the injector by the dosing pipe. The injector leads to the front part of the spiral conveyor where injection and dispersion of the curing mixture into the building mixture from waste packaging is carried out.

In the next preferred embodiment, the upper part of the grinding equipment is fitted with a hopper while the lower part of the grinding equipment is fitted with an outlet connected to the upper inlet of the mixing equipment.

In another preferred embodiment, the dosing equipment for the filling mixture comprises at least one filling mixture container, dosing pump, distribution pipe, and at least one outlet nozzle. The container is connected to the dosing pump, which is then connected to the outlet nozzle by the distribution pipe. The outlet pipe is opened into the mixing chamber and carries out injection and dispersion of the filling mixture into the space of the mixing chamber.

In yet another preferred embodiment, the curing mixture container is fitted with at least one valve. The valve is used for external feeding of the curing mixture into the container from external resources.

In another preferred embodiment, the filling mixture container is fitted with at least one valve. The valve is used for external feeding of the filling mixture into the container from external resources.

In another preferred embodiment the dosing pump and feed pump refer to powered pumps with external power supply.

In another preferred embodiment, the dosing pump, feed pump, and drive unit are electrically connected to the central control unit. The central control unit regulates power supply to these individual parts and controls the synchronization of the entire equipment operation.

The main advantage of this invention is the fact that compact and in particular mobile equipment allowing waste packaging material, especially Tetra Pak packages, to be processed into ground pulp from waste packaging in the place of its disposal. In addition, the equipment processes the ground pulp from waste packaging into a building mixture from waste packaging of the aggregate type, which is either in external moulds, or directly in the equipment itself processed into a construction prefabricated component with any size and shape. The construction prefabricated component then can be used in the building industry where the material of the construction prefabricated component is light and also sufficiently solid and resistant to mechanical damage and exposure to chemical substances as well as weather effects.

### Brief Description of Figures

The invention will be explained in detail by figures where the following is illustrated:

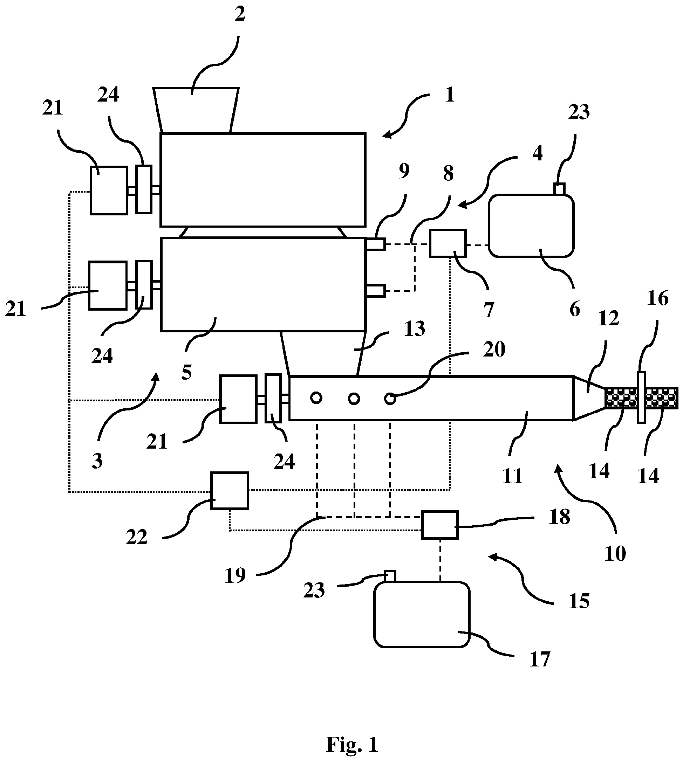

- Fig. 1: a connection diagram of individual parts of the equipment in the version with dedicated drive units for the grinding equipment, the mixing equipment, and the pressing equipment. The illustrated equipment is fitted with several nozzles and injectors and the spiral mechanism is terminated by a through-feed shaped curing mould with a divider;

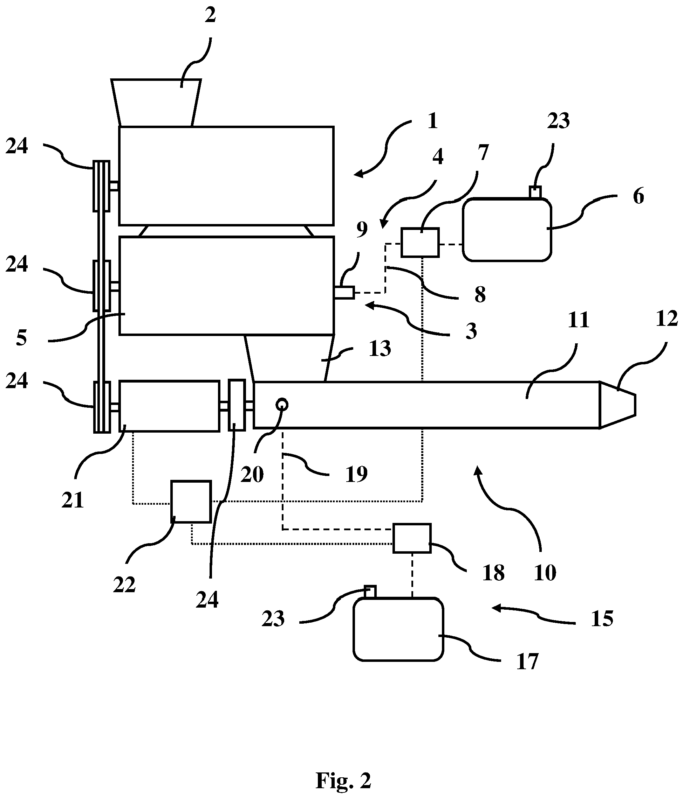

- Fig. 2: a connection diagram of individual parts of the equipment in the version with the central drive unit and a more complex system of torque distribution to the grinding equipment, the mixing equipment, and the pressing equipment. The illustrated equipment is fitted with one nozzle and one injector. The spiral mechanism is terminated by the pressing chamber in the shape of a truncated cone.

### Examples of the Invention Embodiments

The equipment for the environmentally friendly processing of soft waste packaging materials according to Fig. 1 and 2 comprises three basic functional units. The units refer to the grinding equipment **1** for the processing of packaging materials into ground pulp from waste packaging, the mixing equipment **3** for the preparation of a building mixture from waste packaging, and the pressing equipment **10** for remixing and compacting the building mixture from waste packaging and also for the potentially direct preparation of a construction prefabricated component. The grinding equipment **1,** the mixing equipment **3**, and the pressing equipment **10** are assembled, including all their parts to create a unit forming a common integral assembly. This assembly is adapted for installation into a container and/or onto the carriage of a cargo means of transport, which makes the entire integral assembly mobile. According to the non-illustrated example of the invention embodiment, the ideal approach is to implement the assembly into a container that can be transported from one place to another as necessary and also left in the place of interest unloaded without the presence of a means of transport. The outlet of the grinding equipment **1** is connected to the inlet of the mixing equipment **3,** which is then connected by its outlet to the inlet of the pressing equipment **10**. These connections are internally opened and serve for gradual transport of the processed material between individual items of equipment **1**, **3,** and **10**. The grinding equipment **1**, the mixing equipment **3** as well as the pressing equipment **10** are powered either by a single drive unit **21,** or by individual drive units **21.** Transmission of torque from the motor to the equipment **1**, **3**, **10** is provided by the system **24** of torque distribution.

As per illustrations in Fig. 1 and 2, the mixing equipment **3** comprises the dosing equipment **4** for a filling mixture and the mixing chamber **5**. As per the same illustration, the pressing equipment **10** is fitted with the spiral conveyor **11** terminated at its outlet by the pressing chamber **12**. The spiral conveyor **11** carries out final mixing and compacting of the building mixture from waste packaging being released. The inlet diameter of the pressing chamber **12** is larger than its outlet diameter. In the pressing chamber **12,** final compacting of the building mixture from waste packaging is carried out. The grinding equipment **1,** the mixing equipment **3** as well as the pressing equipment **10** are electrically connected to the central control unit **22.** This central control unit **22** forms an integral part of the equipment for environmentally friendly processing of soft waste packaging materials.

As per the example of the invention embodiment illustrated in Fig. 1 and 2, the pressing equipment **10** is fitted at its inlet with a hopper **13** forming a fastener between the pressing equipment **10** and the mixing equipment **3.** Through the hopper **13,** the obtained building mixture from waste packaging is supplied from the mixing equipment **3** to the pressing equipment **10.**

As per the invention embodiment shown in Fig. 1 and 2, the outlet part of the pressing chamber **12** has the shape of a truncated cone. This embodiment of the structural design is intended only for extrusion of a compacted building mixture from waste packaging from the equipment for the environmentally friendly processing of soft waste packaging materials. The compacted building mixture from waste packaging obtained and prepared in this manner is filled into external moulds where the curing process of the building mixture from waste packaging resulting in a construction prefabricated component takes place then,

As per the invention embodiment shown in Fig. 1, the pressing equipment **10** is terminated by a through-feed shaped curing mould **14** with either square or rectangular cross-section. The shape of the curing mould **14** corresponds to the external contour of the construction prefabricated component to be produced. According to another non-illustrated invention embodiment solution, the curing mould **14** can also have other shapes of cross-section, such as circle, triangle, star, crescent or other shapes well known to the person skilled in the state of the art used in the building industry, in particular in the field of manufacture of kerbs, pavements, and spaces as well as decorations with a similar aesthetic purpose. The curing mould **14** in this example of the invention embodiment is connected to the outlet of the pressing chamber **12** and serves for full curing of the semi-finished product of a construction prefabricated component made from the building mixture from waste packaging. As per Fig 1, the preferred through-feed shaped curing mould **14** is fitted with perforation to improve the contact of the compressed building mixture from waste packaging with air affecting the resulting rate of curing of the compressed building mixture. The rate of curing is taken into account when setting the rate of extrusion of the compressed building mixture from waste packaging so that the construction prefabricated component leaving the curing mould **14** is sufficiently cured to make a compact bar-shaped semi-finished product.

As per the example of the invention embodiment illustrated in Fig. 1, the through-feed shaped curing mould **14** is also fitted with a divider **16** with a gauge. The gauge detects the length of the bar-shaped cured construction prefabricated component and activates the divider **16** that carries out the cutting of the semi-finished product to the required length of the construction prefabricated component. The output material coming out of the equipment for the environmentally friendly processing of soft waste packaging materials in this example of the invention embodiment is a finished construction prefabricated component with the required shape and length.

As per the example of the invention embodiment illustrated in Fig. 1 and 2, the equipment for the environmentally friendly processing of soft waste packaging materials also comprises the dosing equipment **15** for curing mixture. The dosing equipment **15** is opened in at least one point to the spiral conveyor **11** where dosing of the curing mixture into the building mixture from waste packaging accelerates the curing process of the compacted building mixture from waste packaging. The movement of the building mixture from waste packaging in the spiral conveyor ensures that this mixture is blended with the curing mixture.

As per the example of the invention embodiment illustrated in Fig. 1 and 2, the dosing equipment **15** of the curing mixture comprises at least one container **17** of curing mixture, feed pump **18,** dosing pipe **19,** and at least one injector **20.** The container **17** is in this example of the invention embodiment connected to the feed pump **18,** which is connected to the injector **20** by the dosing pipe **19**. The injector **20** leads to the front part of the spiral conveyor **11**, where injection and homogeneous dispersion of curing mixture into building mixture from waste packaging is carried out.

According to the same example of the invention embodiment, the grinding equipment **1** is at its outlet, i.e. in its upper part, fitted with a hopper **2**, and at its outlet, i.e. in the lower part, it is connected to the mixing equipment **3**.

As per the example of the invention embodiment illustrated in Fig. 1 and 2, the dosing equipment 4 of the filing mixture comprises at least one container **6** of the filling mixture, dosing pump **7**, distribution pipe **8**, and at least one outlet nozzle **9.** The container **6** is connected to the dosing pump **7,** that is then connected to the outlet nozzle **9** by the distribution pipe **8.** The outlet pipe **9** is opened into the mixing chamber **5** and carries out injection and homogeneous dispersion of the filling mixture into the space of the mixing chamber **5**.

According to the same example of the invention embodiment, the container **6** of the filling mixture and/or the container **17** of the curing mixture are fitted with at least one valve **23.** This valve **23** is used for external feeding of the filling mixture and/or curing mixture into the containers **6**, **17** from external sources.

As per the example of the invention embodiment illustrated in Fig. 1 and 2, the dosing pump **7** and the feed pump **18** refer to electric pumps with external power supply. According to another non-illustrated invention embodiment solution, the integral assembly comprising the equipment for the environmentally friendly processing of soft waste packaging materials installed in the container can be supplemented by an internal power supply unit. Such an internal power supply unit can refer to for example a backup power plant.

As per the example of the invention embodiment illustrated in Fig. 1 and 2, the dosing pump **7**, the feed pump **18,** and the drive unit **21** are electrically connected to the central control unit **22.** The central control unit **22** regulates power supply to these individual parts and controls the synchronization of operation of the entire equipment for the environmentally friendly processing of soft waste packaging materials.

### Industrial Applicability

The proposed equipment for the environmentally friendly processing of soft waste packaging materials, in particular packaging with a high content of cellulose, where the cellulose portion is protected by plastic- and/or metal-based coatings, can be used in the area of communal waste or hazardous waste processing. This method of recycling and reuse of such packaging materials seems to be the only one economically viable solution as the separation of individual components and their subsequent different reuse has turned out to be unrealistic for the time being. The recycled product obtained in this manner can be employed in the building industry as a substitute or additive for the currently used materials and mixtures.

### Overview of the Positions

- 1: grinding equipment
- 2: hopper of the grinding equipment
- 3: mixing equipment
- 4: dosing equipment for filling mixture
- 5: mixing chamber
- 6: container for filling mixture
- 7: dosing pump for filling mixture
- 8: distribution pipe for filling mixture
- 9: dosing equipment nozzle
- 10: pressing equipment
- 11: spiral conveyor
- 12: pressing chamber
- 13: hopper of the pressing equipment
- 14: through-feed shaped curing mould
- 15: dosing equipment for curing mixture
- 16: divider
- 17: curing mixture container
- 18: feed pump for curing mixture
- 19: dosing pipe
- 20: injector
- 21: drive unit
- 22: central control unit
- 23: valve for external feeding of mixture
- 24: system of torque distribution

## Claims

1. The equipment for the environmentally friendly processing of soft waste packaging materials, in particular packaging with a high content of cellulose, where the cellulose portion is protected by plastic- and/or metal-based coatings, comprising the grinding equipment (1) for grinding the packaging into ground pulp from waste packaging, the mixing equipment (3) to mix the ground pulp from waste packaging with a binder to make the building mixture from waste packaging, and the pressing equipment (10) to compact and press the building mixture from waste packaging, **characterized in that** the grinding equipment (1), the mixing equipment (3), and the pressing equipment (10) form an integral system that is adapted for installation into a container and/or onto the carriage of a cargo means of transport, that the items of equipment (1, 3, 10) are mutually connected within the framework of this integral assembly, that the assembly is fitted with at least one drive unit (21) equipped with the system (24) of torque distribution to individual items of equipment (1, 3, 10), that the mixing equipment (3) is fitted with the dosing equipment (4) for a filling mixture and the mixing chamber (5), that the pressing equipment (10) is fitted with a spiral conveyor (11) and the pressing chamber (12) arranged at the outlet of the spiral conveyor (11) to compact the outgoing building mixture from waste packaging, where the inlet diameter of the pressing chamber (12) connected to the spiral conveyor (11) is larger than its outlet diameter, and that the assembly also comprises the central control unit (22), to which the items of equipment (1, 3, 10) are connected.

2. The equipment according to claim 1, **characterized in that** the pressing equipment (10) is also fitted with the hopper (13) connected to the outlet of the mixing equipment (3).

3. The equipment according to claims 1 and 2, **characterized in that** the outlet portion of the pressing chamber (12) has the shape of a truncated cone to extrude the obtained compacted building mixture from waste packaging into external curing moulds.

4. The equipment according to claims 1 through 2, **characterized in that** the pressing equipment (10) is terminated by a through-feed shaped curing mould (14) with either square or rectangular cross-section connected to the outlet of the pressing chamber (12) to create, shape, and fully cure the semi-finished product of a construction prefabricated component, where the through-feed shaped curing mould (14) is fitted with perforation to improve the contact of the compressed building mixture from waste packaging with air and its higher rate of curing.

5. The equipment according to claim 4, **characterized in that** the through-feed shaped curing mould (14) is fitted with the divider (16) with a gauge.

6. The equipment according to claims 3 and 4, **characterized in that** it also comprises the dosing equipment (15) for curing mixture opened in at least one place into the spiral conveyor (11).

7. The equipment according to claim 6, **characterized in that** the dosing equipment (15) for curing mixture comprises at least one curing mixture container (17) connected to the feed pump (18) that is connected to the dosing pipe (19) terminated by at least one injector (20) opened into the front part of the spiral conveyor (11) to disperse the curing mixture in the building mixture from waste packaging.

8. The equipment according to any of claims 1 through 7, **characterized in that** the grinding equipment (1) is, in its upper part, fitted with the hopper (2) and in its lower part, it is, via its lower outlet, connected to the upper inlet into the mixing equipment (3).

9. The equipment according to any of claims 1 through 8, **characterized in that** the dosing equipment (4) for filling mixture comprises at least one container (6) for a filling mixture connected to the dosing pump (7) that is connected to the distribution pipe (8) terminated by at least one outlet nozzle (9) opened into the mixing chamber (5) to disperse the filling mixture in the space of the mixing chamber (5).

10. The equipment according to claim 7, **characterized in that** the container (17) of curing mixture is fitted with at least one valve (23) for external feeding of the curing mixture.

11. The equipment according to claim 9, **characterized in that** the container (6) of filling mixture is fitted with at least one valve (23) for external feeding of the filling mixture.

12. The equipment according to claims 7 and 9, **characterized in that** the dosing pump (7) and the feed pump (18) refer to powered pumps with external power supply.

13. The equipment according to claims 7 and 9, **characterized in that** that dosing pump (7), the feed pump (18), and the drive unit (21) are connected to the central control unit (22) in terms of power supply and data transmission.
